# EUROPÄISCHE PATENTANMELDUNG

(11) **EP 2 090 263 A1**
(43) Veröffentlichungstag der Anmeldung: **19.08.2009**
(21) Anmeldenummer: 08151358.2
(22) Anmeldetag: 13.02.2008
(51) Int. Cl.: A61C 8/00

(54) **Abutment mit Inlay fuer Dentalimplantate**

(71) Anmelder: Straumann Holding AG, 4002 Basel (CH)
(72) Erfinder: Schwieder, Fabian, 4056 Basel (CH); Guenter, Daniel, 4437 Waldenburg (CH)
(74) Vertreter: Modiano, Micaela Nadia

(57) **Zusammenfassung**

Die Erfindung betrifft ein Abutment mit Inlay für Dentalimplantate umfassend ein äußeres Abutmentteil (1'); und ein Inlay (2), das apikal innerhalb des äußeren Abutmentteils (1') angeordnet ist, wobei das Inlay (2) einen koronalen Abschnitt (3) aufweist, der geeignet ist, eine Verbindung zwischen dem Inlay (2) und dem äußeren Abutmentteil (1') herzustellen, und einen apikalen Bereich (4, 104), der zur lösbaren Verbindung mit einem Dentalimplantat geeignet ist, **dadurch gekennzeichnet, dass** die Oberfläche (5) des koronaren Abschnitts (3) des Inlays (2) derart ausgebildet ist, um das darauf unlösbar anzubringende äußere Abutmentteil (1') formschlüssig zu verbinden.

## Beschreibung

### Anwendungsgebiet der Erfindung

Die vorliegende Erfindung betrifft allgemein ein Abutment mit Inlay, zur Verbindungsherstellung zwischen einem Dentalimplantat und einem Abutment, im Besonderen für Schrauben- oder zylinderfärmige Dentalimplantate, wobei das Abutment mit Inlay eine Rotationssicherung bereitstellt und eine einfache Montage des konfektionierten individuellen Zahnersatzes erlaubt.

### Stand der Technik

Ein Abutment wird allgemein, entweder als permanentes oder provisorisches Element auf einem in den Kieferknochen eines Patienten eingesetzten Dentalimplantat, welches hinreichend bekannt ist, befestigt. Um eine gute Fixierung und Verstärkung des Abutments zu erreichen, ist in Richtung des Dentalimplantates im Abutment ein Zwischenelement, ein so genanntes Inlay, eingefügt. Das Abutment kann sowohl provisorisch eingesetzt werden, z.B während des Einheilprozesses eines Dentalimplantats oder auch permanent am Ende der Behandlung, um einen auf dem Abutment modellierten Zahnersatz bereitzustellen.

Das Inlay besteht im allgemeinen aus einem hochfesten Metall oder einer Metalllegierung, um die beim Festziehen einer Verbindungsschraube, die das Abutment mit Inlay mit dem Dentalimplantat verbindet, auftretenden Kräfte besser aufzunehmen. Als Materialien für ein Inlay eignen sich besonders Gold, Titan oder Legierungen davon, die einerseits eine hohe mechanische Festigkeit und Steifigkeit aufweisen und andererseits eine sehr gute Bioverträglichkeit haben. Die Verbindungsanordnung aus Abutment und darin fixiertem Inlay wird während der Behandlung in eine zylindrische Öffnung am koronalen Abschnitt eines Dentalimplantats bzw. auf eine äußere Auflage des Dentalimplantats eingesetzt.

Zur reproduzierbaren Positionierung des Abutments, das vorteilhaft z.B. einen unkomplizierten Austausch eines provisorischen Abutments mit einem Abutment mit aufgesetzter Zahnkrone ermöglicht, und zur Rotationssicherung kann in der Aufnahmebohrung des Dentalimplantats bzw. auf der äußeren Auflage des Dentalimplantats eine nicht-rotationssymmetrische Aufnahmekontur vorgesehen sein, die mit einer apikal am Abutment befindlichen korrespondierenden, nichtrotationssymmetrischen äußeren Gegenkontur in Eingriff treten kann. Das Abutment wird durch Eindrehen einer durch eine erste Öffnung im Abutment und eine zweite Öffnung im Inlay hindurchgehenden Verbindungsschraube in einem im Inneren des Dentalimplantats axial bereitgestelltem Innengewinde fixiert. Wenn die Verbindungsschraube fest angezogen ist, liegt dabei ein konisch ausgebildeter Schaftbereich der Schraube formschlüssig an einem komplementär ausgebildeten apikalen Innenkonus des Inlays an. Der Gewinde-freie Schaftbereich der Schraube ist dabei im Wesentlichen vollständig innerhalb des Inlays eingeschlossen und der apikale Scluaubenbereich mit Außengewinde steht in Eingriff mit einem korrespondierenden Innengewinde eines Dentalimplantats. Die Verbindungsschraube stellt somit eine Fixierung des Abutments mit einem Dentalimplantat in axialer Richtung bereit. Die ineinander greifenden, nichtrotationssymmetrischen Strukturen eines einteiligen Abutments oder eines Abutments mit Inlay sorgen für eine Rotationssicherung um eine virtuelle Mittelachse, d. h. das Abutment mit Inlay kann sich in Bezug auf ein Dentalimplantat nicht verdrehen. Darüber hinaus besteht eine stabile Verbindung des Inlays im Abutment, so dass sich das Inlay weder verdrehen noch verschieben lässt.

Aus der EP 1 656 904 A1 ist solch ein Dentalimplantat-System mit einem Abutment mit einem eingesetzten Inlay bekannt. Das Inlay weist hierbei einen apikalen Bereich auf, der ein auf der Oberfläche ausgebildetes Profil aufweist, das zur dauerhaften Verbindungsherstellung zwischen einem Abutment und einem Dentalimplantat geeignet ist. Das Inlay weist hierbei mindestens einen Schulterbereich auf, um den ein äußeres Abutmentteil angeformt ist. Diese Anformung kann z.B. mit Hilfe eines Abformverfahrens, auch "Molding" genannt, geschehen. Ein Abformverfahren hat jedoch den Nachteil, dass jedes geformte Modell einmalig ist und wenn z.B. Fehler in der Herstellung auftreten, muss man die Form Kosten-aufwendig nacharbeiten oder ein neues Abutment erstellen. Die Schulterbereiche stehen von der Oberfläche des Abutments hervor und durch die relativ kleine Auflagefläche in diesem Bereich besteht die Gefahr, dass sich bei einem darauf angeformten Abutment, entweder durch Materialermüdung oder durch die beim Kauen entstehenden Kräfte, die stoffschlüssige Verbindung zwischen dem Inlay-Material und dem Abutmentmaterial losgelöst wird. Wenn diese Ablösung auftritt, kann sich das Abutment um seine Achse drehen, was einen Austausch des Abutments nach sich zieht. Um eine bestmögliche Festigkeit und Langzeitstabilität des Abutments mit Inlay zu gewährleisten, muss die Verbindung zwischen Abutmentinnenfläche und Inlayaußenfläche nahezu monolithisch sein.

Eine bekannte Methode zur Erzielung einer guten Haftung zwischen den Metallmaterialien ist, die Oberfläche der miteinander zu verbindenden Materialien zu vergrößern. Die oben erwähnten Schulterbereiche des Inlays ermöglichen die Oberfläche im Vergleich zu einer rund-symmetrischen Ausführung in geringem Maße zu vergrößern.

Während des Anformprozesses zwischen den Schulterbereichen können sich jedoch Freiräume ausbilden, z.B. wenn das Anformmaterial, bedingt durch ihre Oberflächenspannung, nicht vollständig an die Oberfläche des Inlays gelangt. Dies kann zu Lufteinschlüssen zwischen der Abutmentinnenfläche und der Inlayaußenfläche führen, was durch die inhomogene Verteilung der Formteile eine Reduzierung der Gesamtfestigkeit mit sich bringt.

Die Materialien zur Anformung sind je nach Verwendungszweck unterschiedlich. So werden z.B. Kunststoffe oder Metall für provisorische Abutments verwendet, da sie preisgünstig sind und auch keine besonderen Anforderungen an Ästhetik erfüllen müssen. Bei der Verwendung von Zahnersatz, wie z.B. Kronen, werden sowohl Edelmetalle und deren Legierungen als auch spezielle Keramiken oder moderne Verbundwerkstoffe verwendet.

Die Schulterbereiche sind auf der Oberfläche des Inlays im Wesentlichen rotationssymmetrisch angeordnet. Zur Fixierung des Dentalimplantats mit dem Abutment wird eine Schraube durch eine Öffnung im Abutment hindurch in das Dentalimplantat eingeschraubt, wobei sich der konische Schraubenkopf in einem komplementär ausgebildeten Innenbereich des Inlays andrückt. Diese Verbindung ereicht ein Festigkeit und Versteifung des Dentalimplantatsystems, jedoch besteht hier keine Rotationssicherung in dem apikalen Bereich, an dem das Abutment an das Inlay angeformt ist. Dies kann bei einer von der Mittelachse abweichenden Krafteinwirkung zu einer Drehbewegung des Abutments auf dem Inlay führen.

Eine Verschiebung der Zahnstellung auch in geringen Dimensionen muss in der Dentaltechnik verhindert werden, sowohl aus ästhetischen als auch gesundheitlichen Gründen. So können durch die Verschiebung des Abutments Spalten entstehen, in denen sich Speisereste ablagern und Karies und Parodontose auslösen können. Ein verschobenes Abutment ist daher schnellstmöglich auszutauschen. Ein Austausch führt allerdings zu zusätzlichen Kosten für die Erstellung und den Einsatz des neuen Abutments und der Patient muss sich unvorteilhaft einer neuen Behandlung unterziehen.

Ein weiteres Problem ist, dass in dem Bereich an dem sich der apikale, geneigte Schulterbereich des Inlays befindet, der die Übergangsstelle zwischen dem Inlay und der Dentalimplantatoberkante bildet, der Querschnitt des an das Inlay angeformten Abutment-Materials sehr dünn ist, so kann es hier bei auftretendem Druck, z.B. beim Kauen von harten Lebensmitteln zu einem Abplatzen des Abutmentmaterials kommen. Inlays sind relativ teuer in der Herstellung, da bei spanender Herstellung, z.B. Fräsen, mehrere Arbeitsschritte zur Bildung der relativ filigranen Schulterbereiche benötigt werden, oder bei der Herstellung mit einem Urformverfahren sehr teure Urformen hergestellt werden müssen.

### Zusammenfassung der Erfindung

Es ist daher eine Aufgabe der vorliegenden Erfindung eine Lösung zu finden, die eine bessere Haftung eines Inlays im Inneren eines Abutments bereitstellt.

Darüber hinaus ist eine besondere Aufgabe der vorliegenden Erfindung eine Lösung zu finden, die eine Rotationssicherung für ein angeformtes Abutment bereitstellt.

Im Rahmen dieser Aufgabe besteht eine weitere Aufgabe der vorliegenden Erfindung darin, ein Abutment mit Inlay zu realisieren, was kostengünstig herzustellen und zu montieren ist.

Diese und weitere der nachstehenden Beschreibung zu entnehmenden Aufgaben werden von einem Abutment mit Inlay für Dentalimplantate gemäß Anspruch 1 gelöst. Weitere vorteilhafte Ausgestaltungen der Erfindung sind in den Unteransprüchen angegeben.

### Kurzbeschreibung der Figuren

Weitere Merkmale und Vorteile der vorliegenden Erfindung sowie die Wirkungsweise der exemplarischen Ausführungsform der vorliegenden Erfindung werden unten mit Bezug auf die begleitenden Zeichnungen beschrieben.

Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden.
Für die gesamte weitere Beschreibung gilt folgende Festlegung: sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figuren-Beschreibungen Bezug genommen.

Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

Im einzelnen zeigen die Figuren wie folgt:
Fig. 1 eine Schnittansicht eines Abutments mit Inlay in montierter Darstellung gemäß einer Ausführungsform der Erfindung;
Fig. 2A eine Seitenansicht eines Inlays gemäß einer Ausführungsform der Erfindung;
Fig. 2B eine Draufsicht des Inlays der Fig. 2A;
Fig. 2C eine Unteransicht des Inlays der Fig. 2A;
Fig. 2D eine perspektivische Ansicht des Inlays der Fig. 2A; und
Fig. 3 eine Schnittansicht eines Abutments mit Inlay in montierter Darstellung gemäß einer weiteren Ausführungsform der Erfindung.

### Beschreibung der bevorzugten Ausführungsformen der Erfindung

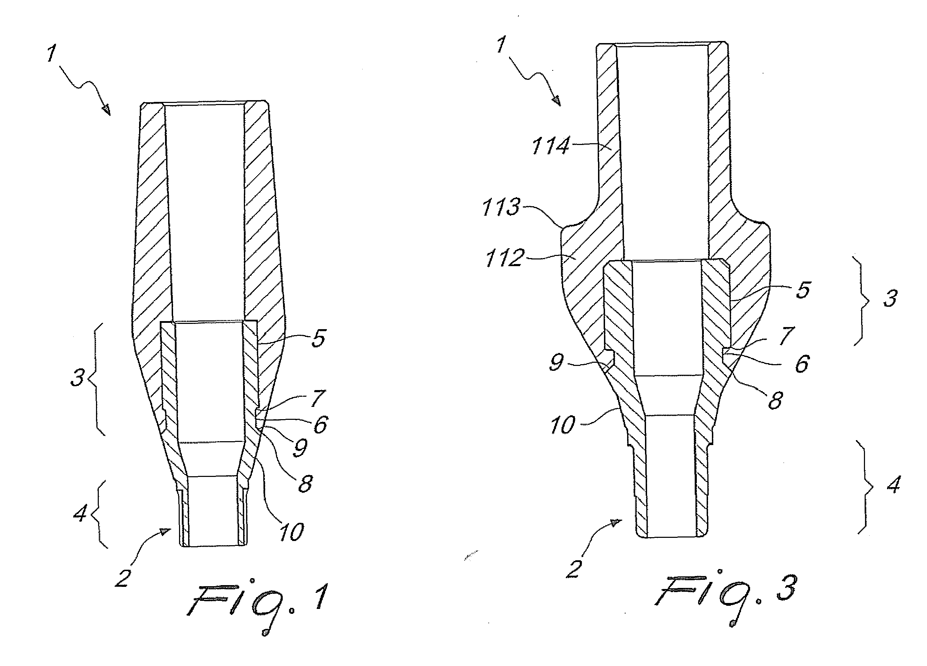

Unter Bezugnahme auf Figur 1 wird eine derzeit bevorzugte Ausführungsform eines Abutments mit Inlay gemäß der vorliegenden Erfindung beschrieben, das allgemein mit Bezugszeichen 1 bezeichnet ist. Ein Abutment mit Inlay für eine Dentalimplantatversorgung, die als solche hinreichend bekannt ist und daher nicht weiter beschirieben ist, umfasst ein äußeres Abutmentteil 1' innerhalb dessen apikal ein Inlay 2 angeordnet ist.

Das Inlay 2 weist koronal einen äußeren Abschnitt 3 auf, der geeignet ist eine Verbindung zwischen Inlay 2 und äußeren Abutmenteil 1' herzustellen und einen apikalen Bereich 4, der zur lösbaren Verbindung mit einem Dentalimplantat geeignet ist.

Die Oberfläche 5 des koronalen Abschnitts 3 des Inlays 2 ist derart ausgebildet, um ein darauf praktisch unlösbar anzubringendes äußeres Abutmentteil 1' formschlüssig zu verbinden. Bei einer formschlüssigen Verbindung wird ein vorher produziertes äußeres Abutmentteil 1' unkompliziert auf den koronalen Abschnitt 3 des Inlays 2 aufgepresst. Alternativ kann das äußere Abutmentteil 1' auf das Inlay 2 aufgespritzt werden. Da hier kein Abformprozess nötig ist, können eine Vielzahl von Varianten von Abutments 1 extrem preisgünstig hergestellt werden. Dies ist besonders bei der Verwendung von provisorischen Abutments 1 von Bedeutung, da diese keine hohen ästhetischen Anforderungen haben. Komplizierte Apparaturen zur Herstellung, wie z.B. Formpressen, sind nicht nötig. Eine einfache Presse genügt, um das äußere Abutmentteil 1' aufzusetzen.

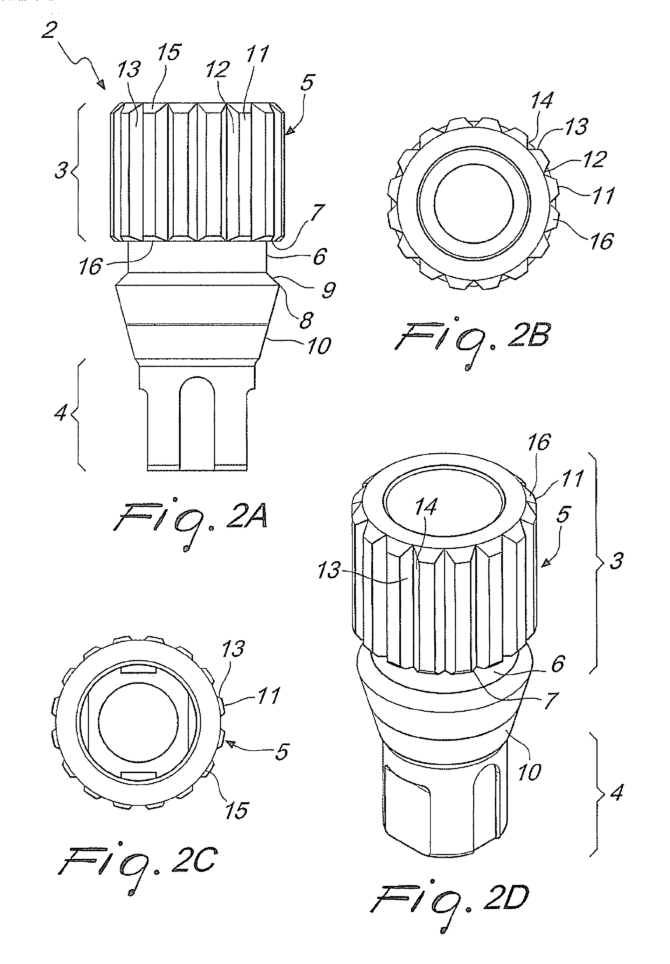

Mindestens ein Teil oder auch die ganze Oberfläche 5 des koronalen Abschnitts 3 des Inlays 2 weist ein Profil auf, das in den Figuren 2A-D näher beschrieben ist, mit dem das äußere Abutmentteil 1' in Verbindung steht. Das Abutmentteil 1' ist in der verbundenen Form mit dem Inlay 2 im Wesentlichen monolithisch. An dem koronalen Abschnitt 3 schließt ein rotationssymmetrischer zylindrischer Bereich 6 an, der von einer ersten Kante 7 und einer zweiten Kante 8 eingeschlossen ist. Ein konische Schulterbereich 9 ist zwischen dem rotationssymmetrischen zylindrischen Bereich 6 und der zweiten Kante 8 ausgebildet. Ein konischer Bereich 10 erstreckt sich im Durchmesser abnehmend von der zweiten Kante 8 in Richtung des apikalen Bereichs 4, der zum Einsatz in einen komplementären Konusbereich des nicht dargestellten Dentalimplantats dient.

Die Figuren 2A bis 2D zeigen weitere Merkmale des Inlays 2 zur Verdeutlichung in diversen Ansichten. Der koronale Abschnitt 3 besteht in dieser Ausführungsform aus einer Mehrzahl von Erhöhungen 11 und dazwischen angeordneten Vertiefungen 12. Die koronale Oberfläche 5 des koronalen Abschnitts 3 des Inlays 2 kann dabei mit Hilfe eines spanenden Verfahren, wie Fräsen, oder eines spanlosen Verfahren, wie Prägen, hergestellt werden.

Die Mehrzahl von Erhöhungen 11 und Vertiefungen 12 auf der Oberfläche 5 des koronalen Abschnitts 3 des Inlays 2 sind hierbei symmetrisch angeordnet und zum Aufpressen oder Anspritzen eines äußeren Abutmentteil 1' geeignet.

Wird ein äußeres Abutmentteil 1' auf die Oberfläche 5 aufgepresst oder angespritzt, so wird ein Teil des Abutment-Basismaterials von einer ersten 13 und einer zweiten 14 Seitenfläche, die eine Art von Keil an einer jeweiligen Vertiefung 12 bilden, abgeschabt und bildet einen Formschluss mit der äußeren Oberfläche 5 des koronalen Abschnitts 3 des Inlays 2.

Der somit gebildete Formschluss erzeugt eine nahezu monolithische Einheit und eine Rotation des äußeren Abutmentteils 1' um die eigene Achse ist somit nicht mehr möglich. An der dem äußeren Abutmentteil 1' zugewandten Seite ist eine obere Kante 15 des koronalen Abschnitts 3 in einem Winkel von etwa 45 Grad angeschrägt, damit das aufzupressende bzw. aufzuspritzende äußere Abutmentteil 1' leicht aufgesetzt bzw.angefertigt werden kann. An der unteren Seite des koronalen Abschnitts 3 ist eine weitere untere Kante 16 angeordnet, die ebenfalls eine Schräge aufweist, jedoch mit kleinerem Winkel.

Nach einem vorteilhaften Aspekt der Erfindung vergrößert die Mehrzahl der Erhöhungen 11 und Vertiefungen 12 die Gesamtoherfläche des koronalen Abschnitts 3 und daher ergibt sich eine bessere Haftung des Abutmentmaterials auf der Oberfläche 5 des koronalen Abschnitts 3. Das äußere Abutmentteil 1' kann hierbei mit Hilfe eines Spritzgussverfahrens fonnschlüssig mit dem Inlay 2 unlösbar verbunden werden.

Andere Ausführungsformen der Profile auf der Oberfläche 5 des koronalen Abschnitts 3 sind auch möglich, z.B. kann das Profil nur teilweise auf der Oberfläche ausgebildet sein. Die Oberflächen können mit Rillen, einer kreuzartigen Struktur oder willkürlich aufgebrachten Strukturen versehen werden, wobei mindestens eine eine axiale Richtung hat, um eine Rotationssicherung herzustellen.

Figur 3 zeigt eine weitere Ausführungsform eines Abutments mit Inlay gemäß der vorliegenden Erfindung. Die Ausführungsform der Figur 3 ist mit der der Figuren 1 bis 2D ähnlich, so dass grundsätzlich gleiche Bezugszeichen wie in der Figur 1 bzw. Figuren 2A bis 2D verwendet werden

Abweichend davon erstreckt sich der konische Bereich 10 im Durchmesser abnehmend von der zweiten Kante 8 in Richtung des apikalen Bereichs 4, der zum Einsatz in einen komplementären Konusbereich des nicht dargestellten Dentalimplantats dient, mit einer leichten Krümmung.

Darüber hinaus ist der konische Schulterbereich 9 im Querschnitt in dieser Ausführungsform größer als der der Ausführungsform in Figur 1 ist. Der apikale Bereich 112 des äußeren Abutmentteils 1' ist birnenförmig ausgebildet und besitzt eine Schulter 113, die anschließend in einen im zylindrischen Abschnitt 114 übergeht, der im Wesentlichen dem Aussendurchmesser des Inlays 2 entspricht.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

### Bezugszeichenliste

1 = Abutment
1' = äußeres Abutmentteil
2 = Inlay
3 = koronaler Abschnitt
4 = apikaler Bereich
5 = Oberfläche des koronalen Abschnitts
6 = rotationssymmetrischer zylindrischer Bereich
7 = erste Kante
8 = zweite Kante
9 = konischer Schulterbereich
10 = konischer Bereich
11 = Erhöhungen
12 = Vertiefungen
13 = erste Seitenfläche
14 = zweite Seitenfläche
15 = obere Kante des koronalen Abschnitts
16 = untere Kante des koronalen Abschnitts
112 = apikale Bereich des Abutments
113 = Schulter des Abutments
114 = zylindrischer Abschnitt des Abutments

## Patentansprüche

1. Abutment mit Inlay für Dentalimplantate umfassend ein äußeres Abutmentteil (1'); und ein Inlay (2), das apikal innerhalb des äußeren Abutmentteils (1') angeordnet ist, wobei das Inlay (2) einen koronalen Abschnitt (3) aufweist, der geeignet ist, eine Verbindung zwischen dem Inlay (2) und dem äußeren Abutmentteil (1') herzustellen, und einen apikalen Bereich (4, 104), der zur lösbaren Verbindung mit einem Dentalimplantat geeignet ist, **dadurch gekennzeichnet, dass** die Oberfläche (5) des koronalen Abschnitts (3) des Inlays (2) derart ausgebildet ist, um das darauf unlösbar anzubringende äußere Abutmentteil (1') formschlüssig zu verbinden.

2. Abutment mit Inlay gemäß Anspruch 1, **dadurch gekennzeichnet, dass** mindestens ein Teil der Oberfläche (5) des koronalen Abschnitts (3) des Inlays (2) ein Profil aufweist, an den das äußere Abutmentteil (1') verbindbar ist.

3. Abutment mit Inlay gemäß Anspruch 1 oder 2, **dadurch gekennzeichnet, dass** unmittelbar an den koronalen Abschnitt (3) ein rotationssymmetrischer zylinderförmiger Bereich (6) anschließt, wobei der rotationssymmetrische zylinderförmige Bereich (6) einen in Bezug auf das Profil geringeren Durchmesser aufweist und somit einen Hinterschnitt bildet.

4. Abutment mit Inlay gemäß irgendeinem der vorhergehenden Ansprüche, **dadurch gekennzeichnet, dass** das Profil auf der im Wesentlichen gesamten Oberfläche (5) des koronalen Abschnitts (3) des Inlays (2) ausgebildet ist.

5. Abutment mit Inlay gemäß irgendeinem der vorhergehenden Ansprüche, **dadurch gekennzeichnet, dass** das Profil auf der Oberfläche (5) des koronalen Abschnitts (3) aus einer Mehrzahl von Erhöhungen (11) und Vertiefungen (12) besteht.

6. Abutment mit Inlay gemäß Anspruch 5, **dadurch gekennzeichnet, dass** die Mehrzahl von Erhöhungen (11) und Vertiefungen (12) auf der Oberfläche (5) des koronalen Abschnitts (3) symmetrisch angeordnet ist.

7. Abutment mit Inlay gemäß Anspruch 5 oder 6, **dadurch gekennzeichnet, dass** die Mehrzahl von Erhöhungen (11) und Vertiefungen (12) eine kreuzartige Struktur bilden.

8. Abutment mit Inlay gemäß irgendeinem der vorhergehenden Ansprüche, **dadurch gekennzeichnet, dass** das äußere Abutmentteil (1) mit Hilfe eines Sprüzgussverfahrens formschlüssig mit dem Inlay (2) unlösbar verbunden wird.

9. Abutment mit Inlay gemäß irgendeinem der vorhergehenden Ansprüche, **dadurch gekennzeichnet, dass** das die Oberfläche (5) des koronalen Abschnitts (3) des Inlays (2) mit Hilfe eines spanenden Verfahren, wie Fräsen, oder eines spanlosen Verfahren, wie Prägen, hergestellt ist.

10. Abutment mit Inlay gemäß irgendeinem der Ansprüche 1 bis 7, **dadurch gekennzeichnet, dass** das äußere Abutmentteil (1') durch formschlüssiges Aufpressen auf den koronalen Abschnitt (3) des Inlays (2) erfolgt.
